# EUROPEAN PATENT SPECIFICATION

(11) **EP 2 076 449 B1**
(45) Date of publication and mention of the grant of the patent: **13.07.2011**
(21) Application number: 07804839.4
(22) Date of filing: 28.08.2007
(51) Int. Cl.: B65D 43/02, B29C 45/00, B29C 45/44

(54) **A PLASTIC LID FOR AN OPEN TOPPED CONTAINER**
KUNSTSTOFFDECKEL UND OBEN OFFENER BEHÄLTER
COUVERCLE PLASTIQUE POUR UN RÉCIPIENT À PARTIE SUPÉRIEURE OUVERTE

(30) Priority: 31.08.2006 ZA 200607279
(43) Date of publication of application: 08.07.2009
(73) Proprietor: The Wacky Widget Development Corporation CC, Western Cape Province 7130 (ZA)
(72) Inventor: RETIEF, Charles, Thomas, Cape Town, Western Cape Province (ZA); WAGENAAR, Nicholas, Wessel, Lodewyk, Cape Town, Western Cape Province (ZA); THOMPSON, Deon, Ronald, Cape Town, Western Cape Province (ZA)
(74) Representative: Aston, Heidi Frances
(86) International application number: PCT/IB2007/002464
(87) International publication number: WO 2008/029234

(56) References cited:
- EP-A- 0 458 250
- EP-A- 1 312 560
- DE-U1- 8 336 794
- GB-A- 2 022 063
- US-A- 4 881 656
- US-A- 5 115 934

## Description

### FIELD OF THE INVENTION

This invention relates to a plastic lid suitable for use as a closure for an open topped container (that is commonly referred to as a tub) of the general type used for packaging consumable foodstuffs such as dairy products.

More particularly the invention relates to a lid of the so-called tamper evident variety in which initial removal of the lid is generally not possible without causing fracturing of a part of the lid assembly or container that then evidences that the lid has been subjected to tampering.

The invention also relates to the production of such a plastic lid.

### BACKGROUND TO THE INVENTION

A substantial quantity of consumable foodstuffs such as yoghurt and other dairy products is packaged in plastic containers that need to be closed in a manner that precludes, as much as possible, tampering with the contents of the container without at least leaving evidence of such tampering. One expedient that is commonly used is to secure a foil lid over the open top of the container in order to hermetically seal the contents therein. In this instance, the foil has to be tom off the container, at least partially, in order to gain access to the contents and tampering is quite obvious.

In the case of small quantities of product that are aimed at being consumed at one sitting, this expedient operates effectively. However, in instances in which the quantity of product packaged is larger so as to provide a supply of the product that is to be consumed progressively in stages over a period of time, an additional plastic lid is regularly provided to enable the container to be re-closed satisfactorily for storage purposes. Such plastic lids generally clip relatively loosely into position on the open end of the container.

Quite clearly, the combination of the foil lid and the plastic lid increases the cost of packaging appreciably. Also, as far as applicants are aware, none of this type of plastic lid that is presently available, forms an effective seal with the open top of the container. Accordingly, the shelf life of the product contained in such a container subsequent to initial opening may be adversely affected.

An alternative form of tamper evident lid has been made available on specially configured injection moulded containers in which a tamper inhibiting skirt is moulded integral with the open end of the container. This skirt is configured such that it obscures the edge of a plastic lid that is essentially inaccessible until a part of the skirt is broken away to expose it. The broken skirt then evidences that tampering has taken place. This type of lid is also not entirely satisfactory in that the lid can, with some degree of care, be removed without breaking the skirt.

As regards published prior art, published European patent application EP1312560 describes a lid in which eight equally angularly spaced latches clip under a peripheral rim on the container and the portions of the rim of the lid corresponding to the catches need to be broken away in order to remove the lid from the container. The spaces between the latches correspond to the angular extent of each catch to allow for moulding and the proposed arrangement is not satisfactory as far as applicant is concerned.

German Gebrauchsmuster DE8336794 describes a somewhat similar arrangement in which three equally angularly spaced tongues project through peripheral slots in a downturned skirt associated with the periphery of the lid to lock the lid relative to the container. An integral ring extending around the skirt and that is directed inwardly under the free edge of the skirt serves to hold the skirt in a position in which the tongues are engaged in the slots. In order to remove the lid, sections of the skirt and the associated integral ring are broken away from the rest at weakened sites so that the skirt can be disengaged from the tongues at positions corresponding to the slots. The ring remains attached to, and is fractured with, or have a the skirt in between the fractures that are required in order to remove the lid.

United States Patent number US4881656 describes a lid that also has multiple angularly spaced latches but that is manufactured in a multistage process that applicant considers inappropriate to mass production.

British patent number GB2022063 describes a screw cap for a beverage bottle having a tamper evident security ring.

### OBJECT OF THE INVENTION

It is an object of this invention to provide a tamper evident plastic lid for a container of the type indicated above that can be used in the absence of a foil lid and yet provide an effective hermetic seal.

It is another object of the invention to provide for the production of such a plastic lid.

### SUMMARY OF THE INVENTION

In accordance with one aspect of the invention there is provided a plastic lid for an open topped generally circular container of the type having an outwardly directed lip encircling the operatively upper open end of the container, the plastic lid comprising a rim of generally annular shape and configured to cooperate with the outwardly directed lip of the container, in use; a squat generally cylindrical section formed integral at its operatively outer end with the inner periphery of the rim and having formed integral therewith at its operatively inner end a closure wall such that the cylindrical section and closure wall together form a plug type of closure adapted to form a seal with the inner periphery of a cooperant container the lid being characterized in that at least one locking member in the form of an endless locking ring having an endless latch formation for engaging the underside of the outwardly directed lip of a cooperant container is connected to the rim by way of one or more integral frangible connecting elements in the form of a multitude of frangible webs or bridges formed integral with the rim and locking ring and spaced apart equally and angularly, relative to each other wherein the locking member is adapted to operatively cooperate with the lip of a cooperant container such that fracturing of one or more of said integral frangible connecting elements occurs during removal or attempted removal of the lid from the container.

Further features of this aspect of the invention provide for a single retaining connecting element of more robust proportions to attach the locking ring to the rim of the lid to hold the ring captive unless the ring and lid are more firmly tom away from each other; for the frangible connecting elements to be located radially inwards of the outer periphery of the rim; for the outer periphery of the rim to have a downturned return flange; for the rim to have an integral outwardly extending finger grip; for the closure wall to have a downwardly directed ridge spaced slightly inwardly of its outer periphery so as to serve as a guide for the closure as it is introduced into an end of a container; and for the locking ring to carry on its outer surface, a retainer ridge or groove whereby the lid is retained on its associated mould component to inhibit fracturing of the frangible webs or ridges during de-moulding and that may be occasioned by a random order of disengagement of moulded parts from the moulded lid.

Preferably, the lid defined above is to be used in conjunction with a thermoformed container that inherently has an inwardly directed endless bead formed immediately adjacent the open end and that is of smoothly rounded shape in cross-section.

It has been found that, with suitable materials being chosen, the lid provided by this invention forms a highly effective hermetic seal with the inner surface of the container at the bead. It is preferred that the closure wall, in the closed position, be spaced inwardly of at least the high point of the endless bead adjacent the open end of the container, and preferably inwardly of the entire bead such that the closure wall can urge the inner end of the squat cylindrical section radially outwards to enhance sealing of the bead against the outer surface of the cylindrical section and ensure that the lid remains in its closed position unless positively removed. A seal having the basic qualities of an O-ring type of seal is thus created.

In accordance with a second aspect of the invention there is provided an injection moulding process for producing a plastic lid as defined above wherein a mould cavity is formed by a primary outer mould member contoured to mould the outer top surface of the lid and movable axially between its operative and inoperative positions; a sliding core mould member contoured to mould the inside surface of the closure wall of the lid and movable in the same axial direction; a sliding sleeve slidable axially on the core mould member and having an edge configured to mould the outside surface of the squat cylindrical section, the inside surface of the locking ring, and undersurface of the rim between the locking ring and squat cylindrical section; a coaxial stripper ring also movable axially and configured to mould the outer surface of the part of the locking ring adjoining the rim and, together with the end region of the sliding sleeve, to form a multitude of frangible connecting webs or bridges between the locking ring and rim; and a concentric collar axially slidable on the sliding sleeve for forming the balance of the outer surface of the locking ring of the lid; the process being characterized in that movement of the various parts of the mould is arranged such that the end of the sliding sleeve is withdrawn from a moulded component prior to it being released by the stripper ring.

Further features of this aspect of the invention provide for the stripper ring to have a groove or ridge for moulding a retainer ridge or groove in the outer surface of the locking ring for ensuring removal of the sliding sleeve from a moulded lid prior to disengagement of the lid from the stripper ring; and for the cooperating surfaces of the stripper ring and collar to be bevelled to enable a relatively small operative mould surface to be provided on the stripper ring.

In accordance with a third aspect of the invention there is provided a plastics injection mould assembly configured for use in a process as defined above.

In order that the above and other features of the invention may be more fully understood one embodiment of each of the aspects of the invention will now be described with reference to the accompanying drawings.

### BRIEF DESCRIPTION OF THE DRAWINGS

In the drawings:-
- Figure 1: illustrates, in exploded isometric view, one embodiment of container and lid of the type with which the invention is concerned;
- Figure 2: is a sectional elevation thereof showing the lid in position on the container;
- Figure 3: is a very much enlarged sectional elevation of each of the two diametrically opposite sides of the container illustrated in Figure 2 and showing the cooperation between the container and lid;
- Figure 4: illustrates a portion of the periphery of the container and lid taken in the direction of line IV to IV in Figure 3 illustrating the spacing of the frangible connecting webs or bridges;
- Figure 5: is a schematic sectional elevation of an injection mould assembly forming the third aspect of the invention that is utilized in the process of the second aspect of the invention;
- Figure 6: is a schematic sectional elevation of a part of the injection mould assembly corresponding to the right-hand edge of a lid with the mould assembly in the closed position;
- Figure 7: is the same as Figure 6 but showing the relative positions of the mould parts after an initial stage of the de-moulding process;
- Figure 8: is the same as Figure 7 but showing the relative positions of the mould parts in a subsequent stage of the de-moulding process; and,
- Figure 9: is the same as Figure 8 but showing the relative positions of the mould parts in a final stage of the de-moulding process.

### DETAILED DESCRIPTION WITH REFERENCE TO THE DRAWINGS

In the embodiment of the invention illustrated in the drawings, a plastic lid (1) is provided for an open topped, but generally circular, somewhat tapering, cylindrical container (2), the container having an outwardly and downwardly directed return lip (3) encircling the operatively upper open end (4) thereof.

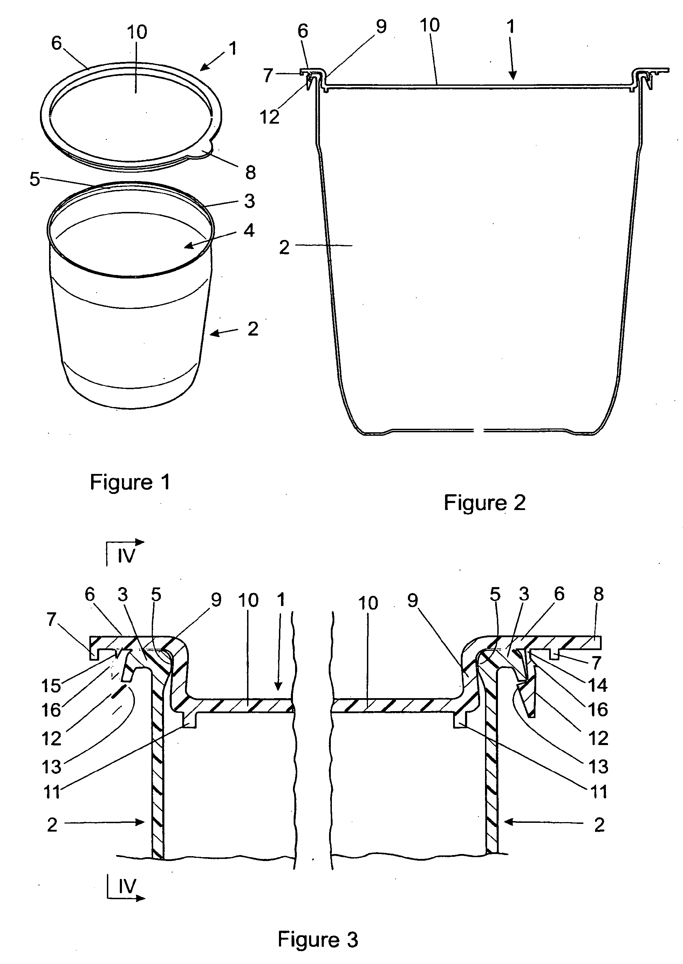

In this particular embodiment of the invention, the lid is designed to be used in conjunction with a thermoformed container that inherently has an inwardly directed endless bead (5) formed on the inside surface immediately adjacent the open end so as to encircle it. This endless bead is of the usual smoothly rounded shape in cross-section, as shown clearly in Figure 3.

Of course, an injection moulded container could also be used and could be provided with just such an endless bead, if required.

The plastic lid comprises a rim (6) of generally annular shape and configured to cooperate with the outwardly directed lip (3) of the container, in use. The outer periphery of the rim has a downturned return flange (7) that, in use, prevents edges of adjacent containers from becoming damaged by mutual interference or impact. The rim also has an integral, outwardly extending finger grip (8) at one position on its periphery.

Formed integral with the inner periphery of the rim is the operatively outer end of a squat, generally cylindrical section (9) that, in turn, has formed integral therewith at its operatively inner end a closure wall (10). This arrangement is such that the cylindrical section and closure wall together form a plug type of closure that, in use, forms an effective seal with the inner periphery, and in particular, the bead (5), of a cooperant container of the type described above. The closure wall has a downwardly directed ridge (11) spaced slightly inwardly of its outer periphery so as to serve as a guide for the closure into an open end of a container.

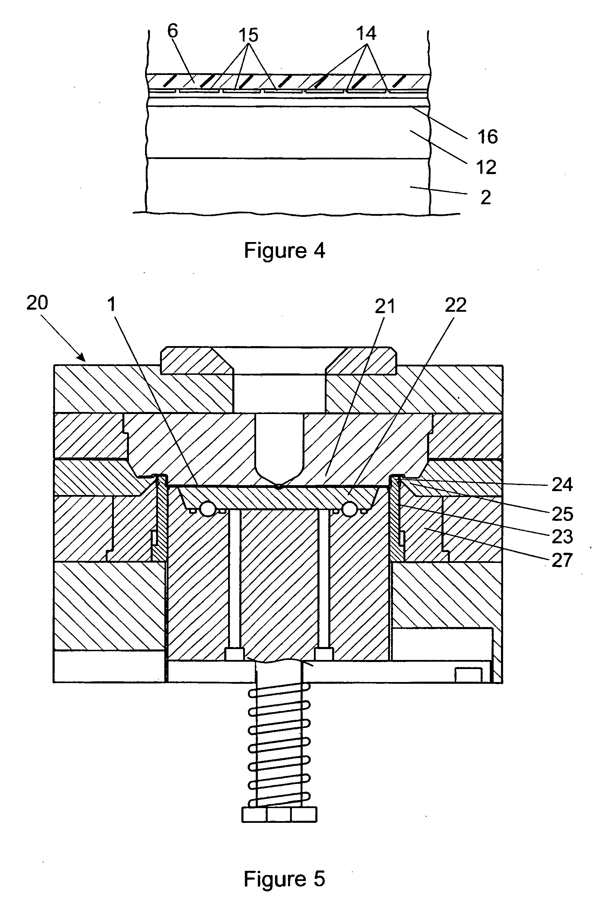

Also formed integral with the rim is a locking member in the form of an endless locking ring (12) having an endless latch formation (13) for engaging the underside of the outwardly and downwardly directed lip of the container, in use. The locking ring is connected to the rim by way of a multitude of frangible connecting webs or bridges (14) formed integral with the rim and locking ring and with spaces (15) between them so that they are equally spaced apart angularly relative to each other. Typically, the webs or bridges may only be about 0.5 to 1.0 millimetres wide with a spacing of say 4 or 5 millimetres between them, simply by way of example. The exact arrangement will vary widely according to the configuration of the lid and the material from which it is moulded. The frangible connecting webs or bridges (14) are located radially inwards of the outer periphery of the rim and are illustrated most clearly in Figure 4.

The locking member is thus adapted to cooperate with the lip of a cooperant container, in use, such that fracturing of one or more, and generally a large number, of said integral frangible connecting elements occurs during removal or attempted removal of the lid from the container.

If required, a single retaining connecting element (not shown) of more robust proportions may serve to attach the locking ring to the rim of the lid to hold the ring captive unless the ring and lid are more firmly tom away from each other.

For purposes that will become more apparent in the following description of the injection moulding process, the locking ring has on its outer surface, a retainer ridge (16) whereby the lid is retained on its associated die component to inhibit fracturing of the frangible webs or ridges during de-moulding.

It has been found that, with suitable materials being chosen, a lid as described above forms a highly effective hermetic seal with the inner surface of the container, particularly at the bead. This is ensured by the fact that the closure wall, in the closed position, is spaced inwardly of at the endless bead (5) adjacent the open end of the container such that the closure wall can urge the inner end of the squat cylindrical section radially outwards to enhance sealing of the bead against the outer surface of the cylindrical section. A seal having the basic qualities of an O-ring type of seal is thus created.

The closure wall and cylindrical section are further configured such that pressure exerted on the central region of the closure wall with the lid in registration with the open end of a container, has the effect of urging the inner end of the cylindrical section radially inwards so that it can snap past the bead thereby effectively locking the lid in its closed position. What this means is that, not only is an effective hermetic seal created in the first place at the packaging depot, thereby rendering any foil closure unnecessary, but also an effective hermetic seal is created each time that the lid is re-installed on the container subsequently and during progressive intermittent consumption of the contents.

The entire lid together with the locking ring is also such that, using appropriate machinery, the lid can be installed onto the periphery of a container such that the locking ring and cooperating lip of the container flex adequately to enable the locking ring to pass the lip whereupon the latch formation engages beneath the lip to positively lock the lid assembly in position in truly tamper evident manner.

Turning now to the second aspect of the invention, and with particular reference to Figures 5 to 9, an injection moulding process whereby the lid described above may be produced involves the use of a mould assembly, generally indicated by numeral (20). The mould assembly provides a mould cavity formed by a primary outer mould member (21) contoured to mould the outer top surface of the lid and that is movable axially between its operative and in operative positions.

A sliding core mould member (22) is contoured to mould the inside surface of the closure wall of the lid and is movable in the same axial direction.

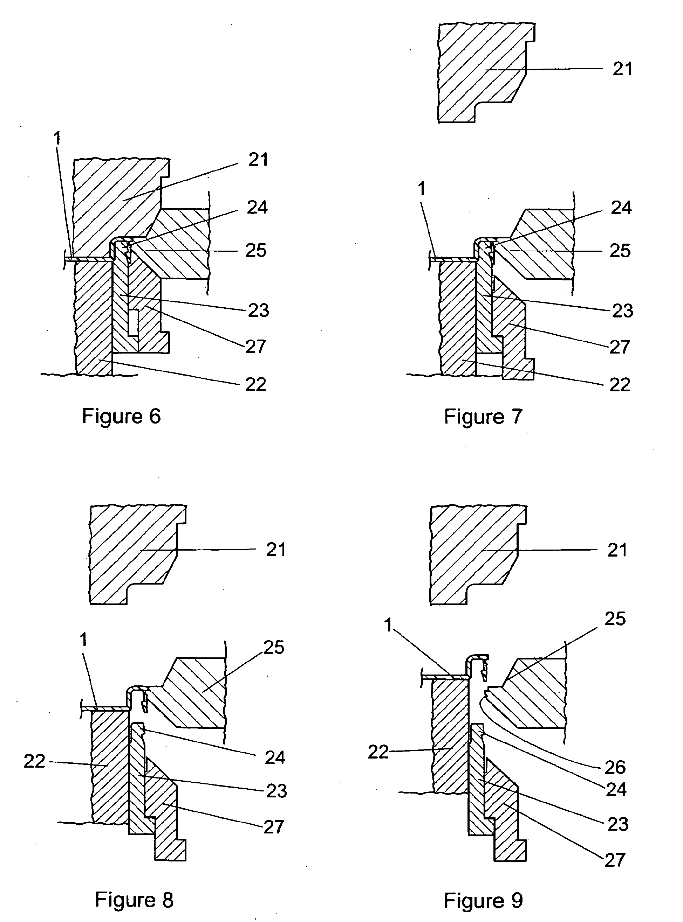

A sliding sleeve (23) is slidable axially on the outside of the core mould member between an operative and in operative terminal position such that, in an operative position, an edge (24) that is configured to mould the outside surface of the squat cylindrical section (9), the inside surface of the locking ring (12), and undersurface of the rim (6) between the locking ring and squat cylindrical section, projects beyond the operative face of the core mould member as shown particularly in Figures 6 and 7.

A coaxial stripper ring (25) is also movable axially and configured to mould the outer surface of the part of the locking ring adjoining the rim. The stripper ring has a groove (26) (see Figure 9) for moulding the retainer ridge (16) in the outer surface of the locking ring for ensuring de-moulding in the manner described below. Also, the stripper ring and sliding sleeve are configured with a multitude of small cavities to form the multitude of frangible connecting webs or bridges between the locking ring and rim.

Finally, a concentric collar (27) that is axially slidable on the outside of the sliding sleeve forms the balance of the mould surface for forming the outer surface of the locking ring of the lid. The cooperating surfaces of the stripper ring and collar are bevelled appropriately to enable a relatively small operative mould surface to be provided on the stripper ring whilst providing it with adequate strength.

The cycle of operation is illustrated progressively in Figures 6 through 9.
Figure 6 illustrates the various mould components with the mould cavity closed and a lid (1) moulded therein.
Figure 7 illustrates an initial stage of de-moulding in which the primary outer mould member is moved axially away from the remainder of the mould assembly, and from the moulded lid. At the same time, the collar has moved away from its operative position so that the locking ring is unsupported on this side in the region of the latch formation (13).
Figure 8 illustrates a subsequent stage in which the core mould member and stripper ring have moved the lid off the end of the sliding sleeve, this being permitted by the freedom of the locking ring to flex outwards to disengage the latch formation from the groove in the sliding sleeve that formed it. The interengagement of the retainer ridge (16) and the groove (26) that formed it enable this to take place without fracturing of the multiple frangible connecting webs or bridges (14).
Figure 9 illustrates the final stage of the de-moulding cycle in which the lid is disengaged from the stripper ring (25) by further movement of the core mould member (22) relative to it.

It will thus be understood that a relatively simple mould assembly may be used to produce lids as described above with all of the mould parts being movable in the same axial direction. This not only simplifies the mould in that no laterally moving mould parts are required, but also enables total symmetry to be achieved in the moulding of the frangible connecting webs or bridges with none being stronger than the other (other than the optional single retaining connecting element).

It will be understood that numerous variation may be made to the embodiment of each of the aspects of the invention described above without departing from the scope hereof, the embodiment described simply being illustrative of the invention.

The end closure wall 10 may, for example, include circumferential biasing formations in the area near its outer periphery. The biasing formations may take the form of a number of concertina formations which are arranged to force the operatively inner end of the cylindrical section (9) outwardly to improve the hermetic seal between the cylindrical section (9) and the open end of the container.

## Claims

1. A plastic lid (1) for an open topped generally circular container (2) of the type having an outwardly directed lip (3) encircling the operatively upper open end of the container, the plastic lid comprising a rim (6) of generally annular shape and configured to cooperate with the outwardly directed lip of the container, in use; a squat generally cylindrical section (9) formed integral at its operatively outer end with the inner periphery of the rim and having formed integral therewith at its operatively inner end a closure wall (10) such that the cylindrical section and closure wall together form a plug type of closure adapted to form a seal with the inner periphery (5) of a cooperant container, the lid being **characterized in that** at least locking (12) in the form of an endless locking ring having an endless latch formation (13) for engaging the underside of the outwardly directed lip of a cooperant container is connected to the rim by way of one or more integral frangible connecting elements (14) in the form of a multitude of frangible webs or bridges formed integral with the rim and locking ring and spaced apart equally and angularly relative to each other wherein the locking member is adapted to operatively cooperate with the lip of a cooperant container such that fracturing of one or more of said integral frangible connecting elements occurs during removal or attempted removal of the lid from the container.

2. A plastic lid as claimed in claim 1 in which the locking ring carries on its outer surface, a retainer ridge or groove (16).

3. A plastic lid as claimed in either one of claims 1 or 2 in which a single retaining connecting element of more robust proportions attaches the locking ring to the rim of the lid to hold the ring captive unless the ring and lid are more firmly tom away from each other.

4. A plastic lid as claimed in any one of the preceding claims in which the frangible connecting elements are located radially inwards of the outer periphery of the rim.

5. A plastic lid as claimed in any one of the preceding claims in which the outer periphery of the rim has a downturned return flange (7).

6. A plastic lid as claimed in any one of the preceding claims in combination with a thermoformed container (2) that inherently has an inwardly directed endless bead (5) formed immediately adjacent the open end and that is of smoothly rounded shape in cross-section.

7. An injection moulding process for producing a plastic lid as claimed in any one of the preceding claims in which a mould cavity is formed by a primary outer mould member (21) contoured to mould the outer top surface of the lid and movable coaxially between its operative and inoperative positions; a sliding core mould member (22) contoured to mould the inside surface of the closure wall (10) of the lid and movable in the same axial direction; a sliding sleeve (23) slidable coaxially on the core mould member and having an edge (24) configured to mould the outside surface of the squat cylindrical section (9), the inside surface of the locking ring (12), and undersurface of the rim between the locking ring and squat cylindrical section; a coaxial stripper ring (25) also movable coaxially and configured to mould the outer surface of the part of the locking ring adjoining the rim and, together with the end region of the sliding sleeve, to form a multitude of frangible connecting webs or bridges (14) between the locking ring and rim; and a concentric collar (27) coaxially slidable on the sliding sleeve for forming the balance of the outer surface of the locking ring of the lid; the process being **characterized in that** movement of said parts of the mould is arranged such that the end of the sliding sleeve is withdrawn from a moulded component prior to it being released by the stripper ring.

8. An injection mould assembly for producing a plastic lid as claimed in any one of claims 1 to 6 in which a mould cavity is formed by a primary outer mould member (21) contoured to mould the outer top surface of the lid and movable coaxially between its operative and inoperative positions and a sliding core mould member (22) contoured to mould the inside surface of the closure wall (10) of the lid and movable in the same axial direction; the mould assembly being **characterised in that** it further comprises a sliding sleeve (23) slidable coaxially on the core mould member and having an edge (24) configured to mould the outside surface of the squat cylindrical section (9), the inside surface of the locking ring (12), and undersurface of the rim between the locking ring and squat cylindrical section; a coaxial stripper ring (25) also movable coaxially and configured to mould the outer surface of the part of the locking ring adjoining the rim and, together with the end region of the sliding sleeve, to form a multitude of frangible connecting webs or bridges (14) between the locking ring and rim; and a concentric collar (27) coaxially slidable on the sliding sleeve for forming the balance of the outer surface of the locking ring of the lid; and wherein axial movement of said parts of the mould may be arranged such that the end of the sliding sleeve is withdrawn from a moulded component prior to it being released by the stripper ring.

9. An injection mould assembly as claimed in claim 8 in which the stripper ring has a groove or ridge (26) for moulding a retainer ridge or groove (16) in the outer surface of the locking ring for ensuring removal of the sliding sleeve from a moulded lid prior to disengagement of the lid from the stripper ring.

10. An injection mould assembly as claimed in either one of claims 8 or 9 in which cooperating surfaces of the stripper ring and collar are bevelled to enable a relatively small operative mould surface to be provided on the stripper ring.

## Patentansprüche

1. Kunststoffdeckel (1) für einen oben offenen, im Wesentlichen kreisförmigen Behälter (2) des Typs, der eine auswärts gerichtete Lippe (3) aufweist, die um das funktionell obere offene Ende des Behälters herum verläuft, wobei der Kunststoffdeckel umfasst: einen Rand (6), der eine im Wesentlichen kreisförmige Form aufweiset und ausgebildet ist, mit der auswärts gerichteten Lippe des Behälters im Gebrauch zusammenzuwirken, einen vertieften, im Wesentlichen zylindrischen Abschnitt (9), der an dessen funktionell äußerem Ende integriert mit dem Innenumfang des Rands ausgebildet ist, und an dessen funktionell innerem Ende eine Verschlußwand (10) integriert damit ausgebildet ist, so dass der zylindrische Abschnitt und die Verschlusswand zusammen einen Verschluss des Stopfentyps bilden, der zur Bildung einer Versiegelung mit dem Innenumfang (5) eines zusammenwirkenden Behälters angepasst ist, wobei der Deckel **dadurch gekennzeichnet ist, dass** mindestens ein Verriegelungselement (12) in der Form eines endlosen Verriegelungsrings mit einer endlosen Schnappverschlussbildung (13) zum Ineingriffnehmen der Unterseite der auswärts gerichteten Lippe eines zusammenwirkenden Behälters mit dem Rand mittels eines integrierten, zerbrechlichen Verbindungselements (14) oder mehrerer integrierter, zerbrechlicher Verbindungselemente (14) in der Form einer Mehrzahl von zerbrechlichen Stegen oder Brücken, die integriert mit dem Rand und dem Verriegelungsring ausgebildet sind und relativ zueinander im gleichen Abstand und winklig angeordnet sind, verbunden ist, wobei das Verriegelungselement angepasst ist, mit der Lippe eines zusammenwirkenden Behälters funktionell zusammenzuwirken, so dass ein Zerbrechen von einem oder mehreren der integrierten, zerbrechlichen Verbindungselemente während des Entfernens oder eines versuchten Entfernens des Deckels von dem Behälter auftritt.

2. Kunststoffdeckel nach Anspruch 1, bei dem der Verriegelungsring auf dessen Außenoberfläche einen Rückhaltewulst oder eine Rückhalterille (16) aufweist.

3. Kunststoffdeckel nach Anspruch 1 oder 2, bei dem ein einzelnes Rückhalteverbindungselement, das stabilere Proportionen aufweiset, den Verriegelungsring an dem Rand des Deckels anbringt, so dass der Ring festgehalten wird, bis der Ring und der Deckel stärker voneinander weggezogen werden.

4. Kunststoffdeckel nach einem der vorhergehenden Ansprüche, bei dem sich die zerbrechlichen Verbindungselemente radial einwärts von dem Außenumfang des Rands befinden.

5. Kunststoffdeckel nach einem der vorhergehenden Ansprüche, bei dem der Außenumfang des Rands einen nach unten gerichteten Rückführungsflansch (7) aufweist.

6. Kunststoffdeckel nach einem der vorhergehenden Ansprüche in einer Kombination mit einem warmgeformten Behälter (2), der inhärent eine einwärts gerichtete endlose Sicke (5) aufweist, die unmittelbar angrenzend an das offene Ende ausgebildet ist und die im Querschnitt eine sanft gerundete Form aufweist.

7. Spritzgussverfahren zum Erzeugen eines Kunststoffdeckels nach einem der vorhergehenden Ansprüche, bei dem ein Formhohlraum durch ein primäres äußeres Formelement (21), das so konturiert ist, dass die äußere obere Fläche des Deckels geformt wird, und das zwischen dessen Arbeitsposition und dessen Ruheposition bewegbar ist; ein gleitendes Kernformelement (22), das so konturiert ist, dass die Innenoberfläche der Verschlusswand (10) des Deckels geformt wird, und das in der gleichen axialen Richtung bewegbar ist; eine gleitende Hülse (23), die koaxial auf dem Kernformelement verschiebbar ist und eine Kante (24) aufweist, die zum Formen der Außenoberfläche des vertieften zylindrischen Abschnitts (9), der Innenoberfläche des Verriegelungsrings (12) und einer unteren Oberfläche des Rands zwischen dem Verriegelungsring und dem vertieften zylindrischen Abschnitt ausgebildet ist; einen koaxialen Abstreiferring (25), der ebenfalls koaxial bewegbar ist und so ausgebildet ist, dass die Außenoberfläche des Teils des Verriegelungsrings, der an den Rand angrenzt, geformt wird, und dass zusammen mit dem Endbereich der gleitenden Hülse eine Mehrzahl von zerbrechlichen Stegen oder Brücken (14) zwischen dem Verriegelungsring und dem Rand gebildet wird; und eine konzentrische Manschette (27), die koaxial auf der gleitenden Hülse zum Formen des Rests der Außenoberfläche des Verriegelungsrings des Deckels verschiebbar ist, ausgebildet ist; wobei das Verfahren **dadurch gekennzeichnet ist, dass** die Bewegung dieser Teile der Form so gestaltet ist, dass das Ende der gleitenden Hülse von einer geformten Komponente vor dem Freisetzen der geformten Komponente durch den Abstreiferring zurückgezogen wird.

8. Spritzgussformanordnung zum Erzeugen eines Kunststoffdeckels nach einem der Ansprüche 1 bis 6, bei der ein Formhohlraum durch ein primäres äußeres Formelement (21), das so konturiert ist, dass die äußere obere Fläche des Deckels geformt wird, und das zwischen dessen Arbeitsposition und dessen Ruheposition bewegbar ist, und ein gleitendes Kernformelement (22), das so konturiert ist, dass die Innenoberfläche der Verschlusswand (10) des Deckels geformt wird, und das in der gleichen axialen Richtung bewegbar ist, ausgebildet ist, wobei die Formanordnung **dadurch gekennzeichnet ist, dass** sie ferner eine gleitende Hülse (23), die koaxial auf dem Kernformelement verschiebbar ist und eine Kante (24) aufweiset, die zum Formen der Außenoberfläche des vertieften zylindrischen Abschnitts (9), der Innenoberfläche des Verriegelungsrings (12) und einer unteren Oberfläche des Rands zwischen dem Verriegelungsring und dem vertieften zylindrischen Abschnitt ausgebildet ist; einen koaxialen Abstreiferring (25), der ebenfalls koaxial bewegbar ist und so ausgebildet ist, dass die Außenoberfläche des Teils des Verriegelungsrings, der an den Rand angrenzt, geformt wird, und dass zusammen mit dem Endbereich der gleitenden Hülse eine Mehrzahl von zerbrechlichen Stegen oder Brücken (14) zwischen dem Verriegelungsring und dem Rand gebildet wird; und eine konzentrische Manschette (27), die koaxial auf der gleitenden Hülse zum Formen des Rests der Außenoberfläche des Verriegelungsrings des Deckels verschiebbar ist, umfasst, und wobei die axiale Bewegung dieser Teile der Form so gestaltet werden kann, dass das Ende der gleitenden Hülse von einer geformten Komponente vor dem Freisetzen der geformten Komponente durch den Abstreiferring zurückgezogen wird.

9. Spritzgussformanordnung nach Anspruch 8, bei welcher der Abstreiferring eine Rille oder einen Wulst (26) zum Formen eines Rückhaltewulsts oder einer Rückhalterille (16) in der Außenoberfläche des Verriegelungsrings zum Sicherstellen der Entfernung der gleitenden Hülse von einem geformten Deckel vor der Freigabe des Deckels von dem Abstreiferring aufweist.

10. Spritzgussformanordnung nach Anspruch 8 oder 9, bei der zusammenwirkende Oberflächen des Abstreiferrings und der Hülse abgeschrägt sind, so dass auf dem Abstreiferring eine relativ kleine funktionelle Formoberfläche bereitgestellt werden kann.

## Revendications

1. Couvercle en matière plastique (1) pour un récipient (2) globalement circulaire à partie supérieure ouverte du type présentant une lèvre (3) qui est dirigée vers l'extérieur et qui entoure l'extrémité supérieure ouverte fonctionnelle, le couvercle en matière plastique comprenant un rebord (6) de forme globalement annulaire et conçu pour coopérer, lors d'une utilisation, avec la lèvre du récipient dirigée vers l'extérieur ; une section courte (9) globalement cylindrique qui est formée d'une seule pièce, à son extrémité extérieure fonctionnelle, avec la périphérie intérieure du rebord et qui présente, formée d'une seule pièce à son extrémité intérieure fonctionnelle, une paroi de fermeture (10) de telle sorte que la section cylindrique et la paroi de fermeture forment ensemble une fermeture du type bouchon apte à former une étanchéité avec la périphérie intérieure (5) d'un récipient associé ; le couvercle étant **caractérisé en ce qu'**au moins un élément de verrouillage (12) en forme de bague de verrouillage sans fin pourvue d'une structure formant taquet sans fin (13) pour venir en contact avec la face inférieure de la lèvre, dirigée vers l'extérieur, d'un récipient associé, est replié au rebord grâce à un ou plusieurs éléments de liaison (14) formés d'une seule pièce et destinés à la rupture, qui ont la forme d'une multitude de nervures ou de ponts destinés à à rupture et formés d'une seule pièce avec le rebord et la bague de verrouillage, et espacés à intervalle régulier et suivant un certain angle les uns par rapport aux autres, étant précisé que l'élément de verrouillage est apte à coopérer de manière fonctionnelle avec la lèvre d'un récipient associé, de telle sorte que la rupture d'un ou plusieurs éléments de liaison d'une seule pièce destinés à la rupture se produise lorsqu'on enlève ou qu'on essaie d'enlever le couvercle du récipient.

2. Couvercle en matière plastique tel que revendiqué dans la revendication 1, dans lequel la bague de verrouillage porte sur sa surface extérieure une arête ou rainure de retenue (16).

3. Couvercle en matière plastique tel que revendiqué dans l'une des revendications 1 ou 2, dans lequel un seul élément de liaison de retenue de plus grandes proportions relie la bague de verrouillage au rebord du couvercle afin de rendre la bague imperdable, sauf si la bague et le couvercle sont arrachés l'un de l'autre plus fermement.

4. Couvercle en matière plastique tel que revendiqué dans l'une quelconque des revendications précédentes, dans lequel les éléments de liaison destinés à la rupture sont situés radialement vers l'intérieur par rapport à la périphérie extérieure du rebord.

5. Couvercle en matière plastique tel que revendiqué dans l'une quelconque des revendications précédentes, dans lequel la périphérie extérieure du rebord a une bride de retour (7) tournée vers le bas.

6. Couvercle en matière plastique tel que revendiqué dans l'une quelconque des revendications précédentes, combinée avec un récipient thermoformé (2) qui présente en soi un bourrelet sans fin (5) dirigé vers l'intérieur et formé tout près de l'extrémité ouverte, et qui présente une forme ronde régulière, en coupe transversale.

7. Procédé de moulage par injection pour produire un couvercle en matière plastique tel que revendiqué dans l'une quelconque des revendications précédentes, selon lequel une cavité de moule est formée par un élément de moule extérieur primaire (21) profilé pour mouler la surface supérieure extérieure du couvercle et mobile coaxialement entre ses positions active et inactive ; un élément de moule central coulissant (22) profilé pour mouler la surface intérieure de la paroi de fermeture (10) du couvercle et mobile dans le même sens axial ; un manchon coulissant (23) apte à coulisser coaxialement sur l'élément de moule central et présentant un bord (24) conçu pour mouler la surface extérieure de la section cylindrique courte (9), la surface intérieure de la bague de verrouillage (12) et la surface inférieure du rebord entre la bague de verrouillage et la section courte une bague dévêtisseuse coaxiale (25) mobile elle aussi coaxialement et conçue pour mouler la surface extérieure de la partie de la bague de verrouillage voisine du rebord et, avec la zone d'extrémité du manchon coulissant, pour former une multitude de saillies ou de ponts de liaison (14) destinés à la rupture, entre la bague de verrouillage et le rebord ; et un collet concentrique (27) apte à coulisser coaxialement sur le manchon coulissant pour former l'équilibrage de la surface extérieure de à bague de verrouillage du couvercle ; le procédé étant **caractérisé en ce que** le mouvement des parties du moule est conçu pour que l'extrémité du manchon coulissant soit extraite d'un élément moulé avant d'être libérée par la bague dévêtisseuse.

8. Ensemble de moulage à injection pour produire un couvercle en matière plastique tel que revendiqué dans l'une des revendications 1 à 6, dans lequel une cavité de moule est formée par un élément de moule extérieur primaire (21) profilé pour mouler à surface supérieure extérieure du couvercle et mobile coaxialement entre ses positions active et inactive, et un élément de moule central coulissant (22) poux mouler la surface intérieure de la paroi de fermeture (10) du couvercle et mobile dans le même sens axial, l'ensemble de moulage étant **caractérise en ce qu'**il comprend aussi un manchon coulissant (23) apte à coulisser coaxialement sur l'élément de moule central et présentant un bord (24) conçu pour mouler la surface extérieure de la section cylindrique courte (9), la surface intérieure de la bague de verrouillage (12) et la surface inférieure du rebord entre la bague de verrouillage et la section cylindrique courte ; une bague dévêtisseuse coaxiale (25) mobile elle aussi coaxialement et conçue pour mouler la surface extérieure de la partie de la bague de verrouillage voisine du rebord et, avec la zone d'extrémité du manchon coulissant, pour former une multitude de saillies ou de ponts de liaison (14) destinés à la rupture, entre la bague de verrouillage et le rebord ; et un collet concentrique (27) apte à coulisser coaxialement sur le manchon coulissant pour former l'équilibrage de la surface extérieure de la bague de verrouillage du couvercle ; et étant précisé que le mouvement axial des parties du moule peut être conçu pour que l'extrémité du manchon coulissant soit extraite d'un élément moulé avant d'être libérée par la bague dévêtisseuse.

9. Ensemble de moulage par injection tel que revendiqué dans la revendication 8, dans lequel la bague dévêtisseuse a une rainure ou une arête (26) pour mouler une arête ou une rainure de retenue (16) dans la surface extérieure de la bague de verrouillage afin de garantir l'extraction du manchon coulissant hors d'un couvercle moulé, avant que le couvercle soit dégagé de la bague dévêtisseuse.

10. Ensemble de moulage par injection tel que revendiqué dans l'une des revendications 8 ou 9, dans lequel les surfaces coopérantes de la bague dévêtisseuse et du collet sont biseautées pour permettre à une surface de moule active relativement petite d'être prévue sur la bague dévêtisseuse,
